# EUROPÄISCHE PATENTSCHRIFT

(11) **EP 2 365 209 B1**
(45) Veröffentlichungstag und Bekanntmachung des Hinweises auf die Patenterteilung: **30.09.2015**
(21) Anmeldenummer: 11152625.7
(22) Anmeldetag: 28.01.2011
(51) Int. Cl.: F03B 1/00, F03B 1/02, F01D 5/30

(54) **Turbinenrad mit stoff- und formschlüssig verbundenen Schaufeln**
Turbine wheel with integrally connected and form-fit blades
Roue de turbine dotée d'ailettes reliées par liaison de matière et par liaison mécanique

(30) Priorität: 02.03.2010 DE 102010002520
(43) Veröffentlichungstag der Anmeldung: 14.09.2011
(73) Patentinhaber: Unterlercher, Bernhard, 9961 Hopfgarten (AT)
(72) Erfinder: Unterlercher, Bernhard, 9961 Hopfgarten (AT)
(74) Vertreter: Dilg, Haeusler, Schindelmann Patentanwaltsgesellschaft mbH

(56) Entgegenhaltungen:
- EP-A1- 0 843 092
- DE-C- 894 997
- DE-C- 939 029
- GB-A- 688 577

## Beschreibung

Die vorliegende Erfindung betrifft ein Turbinenrad.

Darüber hinaus betrifft die Erfindung eine Turbine.

Die Erfindung betrifft ferner ein Verfahren zum Herstellen eines Turbinenrads.

Eine Wasserturbine ist eine Turbine, welche die Wasserkraft nutzbar macht. Dabei wird die kinetische Energie des Wassers mittels der Wasserturbine in mechanische Energie umgewandelt, was die Drehung der Turbinenwelle bewirkt. Diese Drehung kann für den Antrieb von Transmissionsgetrieben verwendet werden, oder sie dient zum Antrieb eines Generators zur Stromerzeugung.

Es sind verschiedene Arten von Wasserturbinen bekannt. Eine vielfach eingesetzt Wasserturbine ist die Peltonturbine, die ein Peltonrad einsetzt.

EP 0,843,092 offenbart ein Peltonrad bestehend aus einzelnen Bechern mit segmentartigen Füssen, die zylindrische Schultern aufweisen, wobei die Becher durch Seitenscheiben, welche über diese zylindrischen Schultern der Segmentfüsse greifen, zu einem formschlüssigen Radverband zusammengefügt sind. An einer oder mehreren Stellen der Umfangsrichtung des Peltonrades zwischen jeweils angrenzenden Radialflanken der Becherfüsse sind zwei Zylinderhülsen mit keilförmigen ebenen Trennflächen angeordnet sind. Eine räumliche Lage der Trennflächen ist so, dass sie eine radiale Linie normal zur Turbinenachse und durch die Turbinenachse beinhalten, wobei die Längsachsen der Zylinderhülsen parallel zur Turbinendrehachse gerichtet sind. Mittels Schraubenzuganker erfolgt eine erste Teilverschiebung der Zylinderhülsen entlang der keilförmigen ebenen Trennflächen in Richtung der Turbinendrehachse, wodurch eine zweite Teilverschiebung in Umfangsrichtung des Radverbandes ausgelöst wird, so dass die Becherfüsse in der Umfangsrichtung des Radverbandes von den Zylinderhülsen weg zu den Drehmomentbolzen gepresst werden und gleichzeitig infolge der Segmentwinkel der Becherfüsse die Schaufeln auch radial nach außen gegen die Schultern der Radscheiben gepresst werden.

DE 699 01 608 T2 offenbart ein Pelton-Turbinenlaufrad für eine PeltonTurbine. Eine Schaufel umfasst an ihrem Fußbereich zwei Sitze, die an zwei Seiten eines äußeren Abschnitts eines Radkranzes befestigt sind. Durch die beiden Sitze sowie durch den von den Sitzen eingeschlossenen radial äußeren Abschnitt ist eine Feststellschraube versehen. Mittels der Feststellschraube wird eine Spannverbindung zwischen der Schaufel und dem Radkranz erzeugt.

DE 196 19 317 A1 offenbart ein Laufrad für eine Freistrahlturbine, wobei jeder Schaufelfuß am Umfang einer Radscheibe eingespannt ist.

DE 939 029 offenbart ein Verfahren zur Herstellung einer aus Einzelschaufeln aufgebauten Beschaufelung für Turbomaschinen. Schaufeln einer Turbomaschine sind zwischen zwei Scheiben befestigbar. Die Schaufeln werden mit den Scheiben verspannt. Die Schaufel wird mit einem Tannenzapfenfuß an entsprechende Nuten zwischen den Scheiben angeordnet. Die Schaufel wird mittels einer Beilage mit der Scheibe verspannt. Eine Nase der Schaufeln, welche entlang der Umfangsrichtung verläuft, dient zur Verklammerung der Schaufeln mit den Scheiben. Die Nase kann alternativ als Schweißnaht ausgebildet werden, um die Verklammerung zu erzeugen.

Somit werden herkömmlich Spannelemente eingesetzt, um Becher und Radscheibe miteinander zu verbinden. Allerdings können sich solche Spannelemente unter der hohen mechanischen Belastung des Turbinenbetriebs lockern. Dies führt zu Sicherheitsproblemen und zu einem hohen Wartungsaufwand.

Es ist somit immer noch schwierig, Turbinenräder robust und gleichzeitig wartungsfrei auszugestalten.

Es ist eine Aufgabe der vorliegenden Erfindung, Turbinenräder robust und wartungsarm auszugestalten.

Diese Aufgabe wird durch ein Turbinenrad, durch eine Turbine und durch ein Verfahren zum Herstellen eines Turbinenrads mit den Merkmalen gemäß den unabhängigen Patentansprüchen gelöst.

Gemäß einem Ausführungsbeispiel der vorliegenden Erfindung ist ein Turbinenrad mit einer Radscheibe und einer Mehrzahl von Schaufeln (zum Beispiel mindestens fünf, insbesondere mindestens zehn) geschaffen, mit den weiteren Merkmalen des Anspruchs 1.

Gemäß einem anderen Ausführungsbeispiel der vorliegenden Erfindung ist eine Turbine (insbesondere eine Peltonturbine) bereitgestellt, die ein Turbinenrad mit den oben beschriebenen Merkmalen mit einer Wellenaufnahme (das heißt einer zentralen Aufnahmeöffnung, die zum Aufnehmen einer Welle eingerichtet ist, die antreibbar ist, wenn die Schaufeln durch ein Antriebsfluid wie zum Beispiel Wasser angetrieben werden) sowie eine Welle aufweist, die durch die Wellenaufnahme durchgeführt und mit dem Turbinenrad verbunden ist.

Gemäß noch einem anderen Ausführungsbeispiel der vorliegenden Erfindung ist ein Verfahren zum Herstellen eines Turbinenrads bereitgestellt, das in Anspruch 10 definiert ist.

Unter dem Begriff "formschlüssig" wird im Rahmen dieser Beschreibung insbesondere verstanden, dass eine Verbindung zweier Verbindungspartner (das heißt Radscheibe und Schaufel) durch das gegenseitige Hintergreifen der Verbindungspartner hergestellt wird, also durch deren Formgebung bewirkt wird. Bei einer formschlüssigen Verbindung ist einer der Verbindungspartner einem anderen anschaulich im Weg, womit das Abziehen eines der Verbindungspartner von dem anderen Verbindungspartner aufgrund deren Formgebung verhindert ist.

Unter dem Begriff "stoffschlüssig" wird im Rahmen dieser Beschreibung insbesondere eine Verbindung verstanden, bei der die Verbindungspartner (das heißt Radscheibe und Schaufel) durch atomare oder molekulare Kräfte zusammengehalten werden. Sie sind gleichzeitig nicht lösbare Verbindungen, die sich nur durch Zerstörung der Verbindungspartner trennen lassen. Mit anderen Worten herrscht bei einer stoffschlüssigen Verbindung eine materielle Verbindung zwischen den Verbindungspartnern, die nicht zerstörungsfrei trennbar sind.

Gemäß einem Ausführungsbeispiel der vorliegenden Erfindung ist ein Laufrad geschaffen, das einfach und kostengünstig herzustellen ist und gleichzeitig eine exzellente Festigkeit zeigt. Ferner ist ein solches Rad im Wesentlichen wartungsfrei betreibbar. Ein solches Rad ist hinsichtlich Festigkeit vergleichbar mit einem Rad, das aus dem Vollen hergestellt wird. Der Vorteil bei der erfindungsgemäßen Bauweise ist jedoch, dass das Rad wesentlich einfacher hergestellt werden kann. Aufgrund der Formschlussbauweise und zusätzlichem Stoffschluss, vorzugsweise Verschweißung, ist eine sehr hohe Festigkeit erzielbar, und dadurch kann das Laufrad strömungsgünstiger hergestellt werden. Spannelemente sind aufgrund der synergistischen Kombination von Form- und Stoffschluss entbehrlich. Mit verblüffend einfachen Mitteln schafft es die Erfindung, den höchsten Festigkeitserfordernissen des Turbinenbaus Rechnung zu tragen, ohne dass hierfür ein hoher konstruktiver Aufwand anfiele.

Im Weiteren werden zusätzliche Ausführungsbeispiele des Turbinenrads beschrieben. Diese gelten auch für die Turbine und das Verfahren.

Die Radscheibe kann ein erstes Scheibenelement und ein zweites Scheibenelement aufweisen, die gemeinsam eine ringförmige Umfangsnut einschließen, in der die Mehrzahl von Schaufeln formschlüssig in Eingriff gebracht ist. Jedes Scheibenelement kann für sich eine ringförmige Umfangsnut aufweisen, wobei bei Übereinanderliegen der beiden Scheibenelemente die beiden Nuten die gemeinsame ringförmige Umfangsnut zur Aufnahme der Schaufeln bilden können. Durch das zweiteilige Vorsehen der Radscheibe ist es möglich, die Schaufeln zunächst zwischen die Scheibenelemente einzulegen und dann stoffschlüssig zu verbinden.

Zumindest eine der Mehrzahl von Schaufeln kann einen Eingriffsabschnitt aufweisen, der zum formschlüssigem Eingriff in eine korrespondierend ausgebildete Nut der Radscheibe ausgebildet ist. Dieser Eingriffsabschnitt kann als Sockel der Schaufeln dienen. Ferner kann ein (zum Beispiel direkt an den Eingriffsabschnitt angrenzender) Verengungsabschnitt vorgesehen sein, der zum Herausführen der Schaufel aus der Radscheibe gegenüber dem Eingriffsabschnitt verengt ausgebildet ist. Die zumindest eine der Mehrzahl von Schaufeln kann ferner einen (zum Beispiel direkt an den Verengungsabschnitt angrenzenden) Stoffschlussfortsatz aufweisen, der außerhalb der Radscheibe angeordnet sein kann und zum stoffschlüssigen Verbinden mit der Radscheibe beiträgt. Anders ausgedrückt kann der Stoffschluss zumindest teilweise zwischen dem Stoffschlussfortsatz der Schaufel und Material der Radscheibe erfolgen. Ein (zum Beispiel direkt an den Stoffschlussfortsatz angrenzender) Schaufelabschnitt kann mittels eines Antriebsfluids (zum Beispiel Wasser oder Dampf) antreibbar sein. Der Schaufelabschnitt kann im Falle eines Peltonrads zwei Becher mit einer dazwischen angeordneten Trennkante aufweisen. Im montierten Zustand kann der Eingriffsabschnitt im Inneren der Radscheibe liegen und direkt benachbart zu dem Verengungsabschnitt angeordnet sein. Unmittelbar neben dem Verengungsabschnitt kann der Stoffschlussfortsatz angeordnet sein, an den sich der Schaufelabschnitt anschließt. Insbesondere das Vorsehen eines Stoffschlussfortsatzes ist vorteilhaft, da ein solcher zum Beispiel ringförmig ausgebildeter Abschnitt zum Herstellen einer stoffschlüssigen Schweißverbindung mit der Radscheibe dienlich sein kann.

Die Schaufel und insbesondere der Schaufelsockel weisen einen Querschnitt in einer Querschnittsebene auf. Die Querschnittsebene kann derart beschrieben werden, dass die Querschnittsebene eine Normale aufweist, welche parallel zu einer Umfangsrichtung des Turbinenrades ausgerichtet ist. Die Umfangsrichtung ist bezüglich der Drehachse des Turbinenrades definiert. Ausgehend von einem Bezugspunkt in der Querschnittsebene verläuft ein Vektor der Umfangsrichtung rechtwinklig zu einer Linie, welche radial zum Mittelpunkt (bzw. zur Drehachse) des Turbinenrades verläuft. Anders ausgedrückt weist die Turbine eine Turbinenebene auf, in welcher Turbinenebene sich die Turbine um eine Drehachse dreht. Die Normale der Turbinenebene ist parallel zu der Drehachse der Turbine. Die Normale der Querschnittsebene ist senkrecht zu der Normalen der Turbinenebene.

In der Querschnittsebene sind Querschnitte des Eingriffsabschnitts, des Verengungsabschnitt und des Stoffschlussfortsatzes abgebildet.

Erfindungsgemäß wird in einer Schweißnut eine stoffschlüssige Verbindung erzeugt , wobei die Schweißnut zwischen einem äußeren Durchmesser eines Bereichs der Radscheibe, (z.B. einem inneren Durchmesser) einem Bereich des Stoffschlussfortsatzes und einem (z.B. bezüglich der Drehachse des Turbinenrades axialen) Bereich des Verengungsabschnitts eingefügt wird.

In der Querschnittsebene weist der Stoffschlussfortsatz in axialer Richtung eine Breite von 100% auf. In der Querschnittsebene kann der Verengungsabschnitt in axialer Richtung eine Breite von ungefähr 35% bis ungefähr 45 %, insbesondere von ungefähr 40%, der Breite des Stoffschlussfortsatzes aufweisen. Die stoffschlüssige Verbindung, welche zwischen der Radscheibe, dem Stoffschlussfortsatz und dem Verengungsabschnitt eingefügt werden kann, kann in der Querschnittsebene in axialer Richtung eine Breite von ungefähr 25% bis ungefähr 35 %, insbesondere ungefähr 30%, der Breite des Stoffschlussfortsatzes aufweisen.

Ferner kann in einer weiteren Schweißnut eine weitere stoffschlüssige Verbindung eingefügt werden, wobei die weitere Schweißnut insbesondere zwischen dem äußeren Durchmesser eines weiteren Bereichs der Radscheibe, (z.B. ein inneren Durchmesser) einem weiteren Bereich des Stoffschlussfortsatzes und einem (z.B. bezüglich der Drehachse des Turbinenrades axialen) weiteren Bereich des Verengungsabschnitts eingefügt werden kann. Die weitere Schweißnut ist z.B. an einem in axialer Richtung gegenüberliegenden Bereich des Verengungsabschnitts angeordnet. Die weitere stoffschlüssige Verbindung, welche zwischen der Radscheibe, dem Stoffschlussfortsatz und dem Verengungsabschnitt eingefügt werden kann, kann in der Querschnittsebene in axialer Richtung eine Breite von ungefähr 30% der Breite des Stoffschlussfortsatzes aufweisen. Die Summe der Breitenabmessungen der stoffschlüssigen Verbindungen kann somit ungefähr 60% der Breite des Stoffschlussfortsatzes aufweisen.

Mit der oben aufgeführten Anordnung der stoffschlüssigen Verbindungen kann bis zu dem engsten Querschnitt, d.h. dem Verengungsabschnitt, eine stoffschlüssige Verbindung geschaffen werden. Aufgrund der Tiefe der stoffschlüssigen Verbindung und der stoffschlüssigen Fixierung des Verengungsabschnitts, können die Turbinenschaufeln robuster an der Radscheibe befestigt werden. Insbesondere benötigt es bei der Befestigung der Schaufeln keiner Verspannungselemente um eine Klemmpassung zu erzeugen, sondern eine reine stoffschlüssige Verbindung kann ausreichend sein.

Dies führt zur einer robusteren Verbindung zwischen der Radscheibe und den Schaufeln, insbesondere wenn die Radschaufel aus dem ersten Scheibenelement und dem zweiten Scheibenelement zusammengesetzt ist. Die stoffschlüssigen Verbindungen, welche von außen bis zu dem Verengungsquerschnitt reichen, können verhindern, dass bei Belastung der Radscheibe die Scheibenelemente nach außen hin nachgeben. Es kann mittels der stoffschlüssigen Verbindungen verhindert werden, dass sich die Scheibenelemente verbiegen und auseinanderdriften, sodass der Formschluss, welcher durch die durch die Scheibenelemente gebildete Umfangsnut gebildet werden kann, nicht beeinträchtigt wird. Somit kann ein robusterer Formschluss erzeugt werden, mit welchem einfach und sehr genau eine Verbindung zwischen Radscheibe und Schaufelelement generierbar ist.

Mit der oben erläuterten Ausführungsform, in welcher eine massive Schweißnaht in der Schweißnut und in der weiteren Schweißnut eine Breite von ungefähr 60% der Breite des Stoffschlussfortsatzes aufweist, kann der nahezu die gesamte Breite (Querschnitt) für die stoffschlüssige Verbindung (Schweißnaht) genützt werden. Die Verbindung der einzelnen Schaufeln kann durch die massive Schweißnaht von ca. 60% des gesamten Sockelquerschnitts (bzw. Stoffschlussfortsatz) robuster ausgeführt werden. Die Schaufeln z.B. von Gas - und Dampfturbinen werden hauptsächlich durch die Fliehkraft und durch gleichmäßige Kräfte beansprucht. Bei Peltonschaufeln einer Perltonturbine hingegen treten große Stoßbelastungen auf. Deshalb ist wichtig den gesamten Sockelquerschnitt für eine stoffschlüssige Verbindung zu nützen sowie eine Relativbewegung der einzelnen Schaufeln zueinander und zu der Radscheibe zu verhindern.

Die Dimensionen der Schweißnut können durch Auslegung des äußeren Durchmessers der Radscheibe, des Bereichs (z.B. eines inneren Durchmessers) des Stoffschlussfortsatzes und des (z.B. bezüglich der Drehachse des Turbinenrades axialen) Bereichs des Verengungsabschnitts genau vorherbestimmt werden. Die Festigkeiten der in der Schweißnut eingefügten stoffschlüssigen Verbindung können daher besser berechenbar und reproduzierbar sein.

Das Turbinenrad kann ein Wasserturbinenrad, ein Dampfturbinenrad oder ein Gasturbinenrad sein. Bevorzugt ist das Turbinenrad ein Wasserturbinenrad. Besonders mit hohen Leistungen wirken auf ein Turbinenrad extreme mechanische Belastungen ein. Durch die erfindungsgemäße Kombination einer stoffschlüssigen mit einer formschlüssigen Verbindung kann ein Turbinenrad für Wasserkraftanwendungen ausreichend robust ausgebildet sein. Dann ist insbesondere eine stoffschlüssige Schweißverbindung bevorzugt. Bei Anwendungen mit niedrigeren Leistungen, zum Beispiel für Haushaltsanwendungen, können einige 100 kW Leistung ausreichend seien. Gerade für solche Anwendungen sind auch andere kraftschlüssige Verbindungsarten geeignet, insbesondere eine Lötverbindung.
Bei dem Turbinenrad kann die Verbindung zwischen der Mehrzahl von Schaufeln und der Radscheibe spannelementfrei sein. Anders ausgedrückt kann die Verbindung zwischen Schaufeln und Radscheibe ohne separate Spannelemente wie zum Beispiel Schrauben oder Bolzen realisiert werden. Es ist möglich, dass der Formschluss und der Stoffschluss die alleinigen oder einzigen Verbindungsarten zwischen Radscheibe und Schaufeln sind. Gemäß einem Ausführungsbeispiel der vorliegenden Erfindung sind Vorteile gegenüber einem Laufrad in reiner Formschlussbauweise erreichbar. Sockelquerschnitte der Schaufeln können erfindungsgemäß geringer bleiben, da die Sockel durch kein Spannsystem geschwächt werden. Bei einer reinen Formschlussbauweise muss die Belastung rein über den Sockel aufgenommen werden. Bei der erfindungsgemäßen Bauweise übernehmen auch Seitenscheiben einen Teil der Kräfte. Bei der erfindungsgemäßen Bauweise ist ein nachträgliches Überprüfen von Vorspannbolzen (wie es bei einer reinen Formschlussbauweise mit Spannelement notwendig ist) nicht erforderlich. Ferner ist einfache Fertigung der einzelnen Teile möglich, weil Turbinenschaufeln einfach hergestellt werden können, da sie einzeln gefertigt und montiert werden können. Laufräder mit kleinen Durchmessern sind erfindungsgemäß möglich, da auf ein Spannsystem verzichtet werden kann.

Die Schaufeln können aus demselben Material gebildet sein wie die Radscheibe. Dies schafft eine gute Grundlage für eine Schweißverbindung als stoffschlüssige Verbindungsart. Als Material für die Schaufeln und die Radscheibe kann zum Beispiel Edelstahl, Aluminium, Bronze oder andere Legierungen (zum Beispiel Chrom-Nickel) eingesetzt werden.

Die Schweißnut kann in Umfangsrichtung der Radscheibe verlaufen und dabei mehrere Schaufeln passieren. Die Schweißnut und entsprechend die stoffschlüssige Verbindung können insbesondere entlang des gesamten Umfangs der Radscheibe gebildet werden.

Die stoffschlüssige Verbindung kann entlang des gesamten Umfangs der Radscheibe durchgehend, das heißt unterbrechungsfrei, gebildet sein. Insbesondere kann eine durchgängige Schweißnaht gebildet sein, womit eine umfänglich gleichmäßige und hohe Festigkeit sichergestellt werden kann.

Die stoffschlüssige Verbindung kann zwischen der Radscheibe und zumindest einem Teil (insbesondere allen) der Mehrzahl von Schaufeln gebildet sein. Alternativ oder ergänzend kann die stoffschlüssige Verbindung zwischen benachbarten der Mehrzahl von Schaufeln gebildet sein. In letzterem Ausführungsbeispiel werden die Schaufeln umfänglich miteinander stoffschlüssig verbunden, was die Festigkeit des Gesamtsystems weiter erhöht. Dies wird begünstig, wenn in der Umfangsnut benachbarte Schaufeln unmittelbar aneinander angrenzen, das heißt einander berühren.

Die stoffschlüssige Verbindung wird zwischen der Radscheibe und der Mehrzahl der Schaufeln entlang eines äußeren Durchmessers der Radscheibe gebildet . Somit kann in einem Außenbereich der Radscheibe, das heißt gut zugänglich für einen Schweißapparat oder dergleichen, eine umlaufende Schweißnaht gebildet werden, was eine symmetrische Festigkeit garantiert.

Ergänzend kann die stoffschlüssige Verbindung zwischen der Radscheibe und der Mehrzahl der Schaufeln an einem Sockelende der Mehrzahl der Schaufeln gebildet sein. Durch diese Maßnahme kann auch das Sockelende der Schaufeln in die Erhöhung der Festigkeit miteinbezogen werden. Wird auch an dieser Stelle eine stoffschlüssige Verbindung generiert, so ist das Turbinenrad für noch höhere Belastungen geeignet.

Im Weiteren werden zusätzliche Ausführungsbeispiele der Turbine beschrieben. Diese gelten auch für das Turbinenrad und das Verfahren.

Die Turbine kann insbesondere eine Wasserturbine sein, die kinetische Energie des Wassers in mechanische Energie umgewandelt, was die Drehung der Welle bewirkt. Dies ermöglicht den Antrieb von Transmissionsgetrieben oder eines Generators zur Stromerzeugung. Alternativ kann die Turbine eine Dampfturbine, eine Gasturbine, etc. sein.

Im Weiteren werden zusätzliche Ausführungsbeispiele des Verfahrens beschrieben. Diese gelten auch für die Turbine und das Turbinenrad.

Bei dem Verfahren kann das stoffschlüssige Verbinden ein Schweißen, Löten, Kleben und/oder Vulkanisieren aufweisen. Insbesondere - aber nicht nur - für Anwendungen der Wasserkraft im hohen Leistungsbereich von zum Beispiel bis 10000 kW stellt das Bilden einer Schweißverbindung eine bevorzugte Lösung dar. Besonders Schutzgasschweißen ist als sehr einfaches und dennoch ausreichend wirksames Schweißverfahren bevorzugt. Andere Schweißverfahren sind jedoch möglich, zum Beispiel Elektroschweißen oder Laserschweißen.

Ferner kann das Verfahren ein Einlegen der Mehrzahl von Schaufeln in eine ringförmige Umfangsnut eines ersten Scheibenelements der Radscheibe, ein nachfolgendes stoffschlüssiges Verbinden der Mehrzahl von eingelegten Schaufeln mit dem ersten Scheibenelement, ein nachfolgendes Einlegen der stoffschlüssig mit dem ersten Scheibenelement verbundenen Mehrzahl von eingelegten Schaufeln in eine ringförmige Umfangsnut eines zweiten Scheibenelements zum formschlüssigen in Eingriff Bringen, und ein nachfolgendes stoffschlüssiges Verbinden der stoffschlüssig mit dem ersten Scheibenelement verbundenen Mehrzahl von eingelegten Schaufeln mit dem zweiten Scheibenelement aufweisen. Anders ausgedrückt kann gemäß diesem Ausführungsbeispiel ein zweimaliges Bilden einer stoffschlüssigen Verbindung erfolgen, nämlich nach dem Einlegen der Schaufeln in das erste Scheibenelement (zwischen den Schaufeln und dem ersten Scheibenelement) und dann nochmals nach dem Aufsetzen des zweiten Scheibenelements auf die Schaufeln (zwischen den Schaufeln und dem zweiten Scheibenelement). Dies stellt eine besonders feste stoffschlüssige Verbindung her.

Alternativ kann das Verfahren ein Einlegen der Mehrzahl von Schaufeln in eine ringförmige Umfangsnut eines ersten Scheibenelements der Radscheibe, ein nachfolgendes Einlegen der in die ringförmige Umfangsnut des ersten Scheibenelements eingelegte Mehrzahl von eingelegten Schaufeln in eine ringförmige Umfangsnut eines zweiten Scheibenelements zum formschlüssigen in Eingriff Bringen, und sodann (nachfolgend) ein stoffschlüssiges Verbinden der Mehrzahl von eingelegten Schaufeln mit dem ersten Scheibenelement und mit dem zweiten Scheibenelement aufweisen. Gemäß diesem Ausführungsbeispiel erfolgt das Bilden der formschlüssigen Verbindung erst dann, wenn die Schaufeln zwischen die gegenüberliegenden Scheibenelemente formschlüssig eingelegt, aber noch nicht stoffschlüssig fixiert sind.

Vorteilhaft kann die Mehrzahl der Schaufeln geschmiedet werden, das heißt als Schmiedeteile vorgesehen werden. Die Festigkeit kann weiter erhöht werden, wenn geschmiedete Einzelschaufeln eingesetzt werden, da die Materialfaser entlang jeder einzelnen Schaufel läuft. Dies wäre bei einem Rad aus dem Vollen nicht möglich. Die geschmiedeten Schaufeln können nachbearbeitet werden, zum Beispiel mittels Fräsens. Somit können Schmiederohlinge für die Schaufeln verwendet werden, die bedarfsweise aber nicht zwingend nachbearbeitet werden können. Dadurch ergibt sich eine hohe Festigkeit, da die Faser entlang der Turbinenschaufel läuft.

Im Folgenden werden exemplarische Ausführungsbeispiele der vorliegenden Erfindung mit Verweis auf die folgenden Figuren detailliert beschrieben.
Fig. 1 bis Fig. 4 zeigen räumliche Ansichten eines Wasserturbinenrads gemäß einem exemplarischen Ausführungsbeispiel der Erfindung.
Fig. 5 bis Fig. 7 zeigen Querschnittsansichten eines Wasserturbinenrads gemäß einem exemplarischen Ausführungsbeispiel der Erfindung.
Fig. 8 zeigt eine Querschnittsansicht eines Dampfturbinenrads gemäß einem exemplarischen Ausführungsbeispiel der Erfindung.
Fig. 9 zeigt eine Querschnittsansicht einer Wasserturbinenschaufel eines Wasserturbinenrads gemäß einem exemplarischen Ausführungsbeispiel der Erfindung.

Gleiche oder ähnliche Komponenten in unterschiedlichen Figuren sind mit gleichen Bezugsziffern versehen.

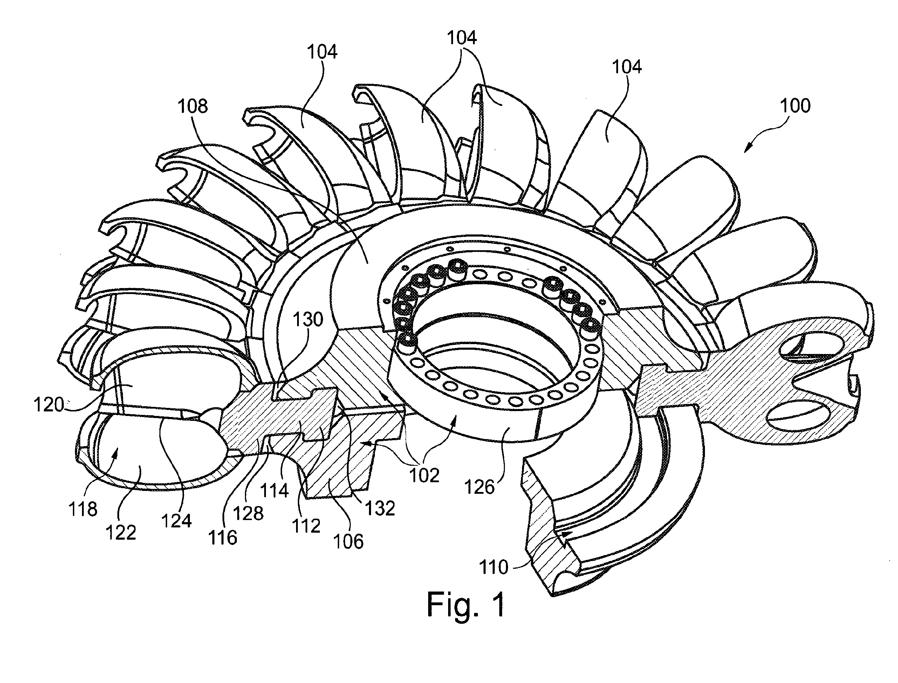

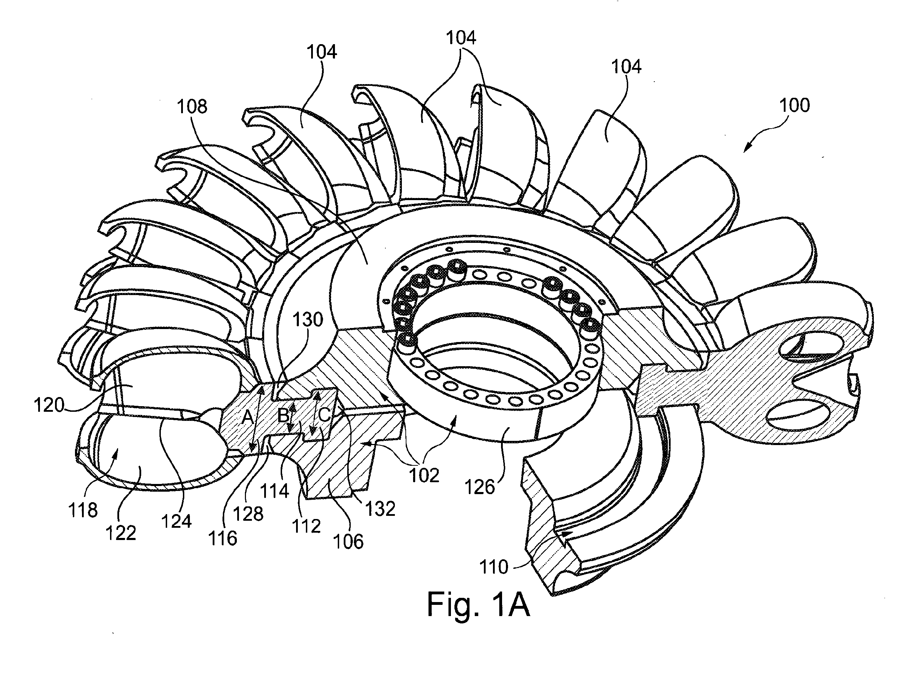

Fig. 1 zeigt eine räumliche Schnittansicht eines Wasserturbinenrads 100 gemäß einem exemplarischen Ausführungsbeispielen der Erfindung.

Das Wasserturbinenrad 100 enthält eine aus mehreren Komponenten zusammengesetzte Radscheibe 102 und eine Mehrzahl von umfänglich angeordneten Bechern oder Schaufeln 104. Die Schaufeln 104 sind entlang eines Umfangs der Radscheibe 102 mit der Radscheibe 102 sowohl in formschlüssigem Eingriff gebracht als auch mit der Radscheibe 102 verschweißt. Diese doppelte Befestigungstechnik bewirkt eine außerordentlich hohe Robustheit des Wasserturbinenrads 100.

Die Radscheibe 102 weist ein erstes Scheibenelement 106 und ein zweites Scheibenelement 108 auf. Darüber hinaus ist ein Befestigungsring 126 zum Befestigen der Radscheibe 102 an einer nicht gezeigten Turbinenwelle vorgesehen, die durch eine Wellenaufnahmeöffnung 140 im zentralen Bereich der Radscheibe 102 hindurchführbar und drehfest befestigbar ist. Die Scheibenelemente 106, 108 bilden im zusammengefügten Zustand in ihrem Inneren gemeinsam eine ringförmige Umfangsnut, siehe Bezugszeichen 110, in der Sockel- oder Eingriffsabschnitte 112 der Schaufeln 104 formschlüssig in Eingriff genommen sind. Anders ausgedrückt korrespondiert die äußere Form der Eingriffsabschnitte 112 mit der Form der ringförmigen Umfangsnut 110.

Die Schaufeln 104 haben neben dem Eingriffsabschnitt 112 einen daran direkt angrenzenden Verengungsabschnitt 114, der zum Herausführung der Schaufel 104 aus der der Radscheibe 102 ausgebildet ist. Anders ausgedrückt ist jede Schaufel 104 an dem Verengungsabschnitt 114 gegenüber dem Eingriffsabschnitt 112 verengt, womit der Formschluss bewerkstelligt ist. Die Radscheibe 102 weist um die Umfangsnut 110 herum einen verengten Bereich auf, der mit dem Verengungsabschnitt 114 korrespondiert. Die Schaufeln 104 haben angrenzend an den Verengungsabschnitt 114 einen in etwa ringförmigen Schweißfortsatz 116, der außerhalb der Radscheibe 102 angeordnet ist und zum Schweißverbinden mit der Radscheibe 102 vorgesehen ist. Ein Peltonschaufelabschnitt 118 kann zum Schaufeln von Wasser ausgebildet sein. Der Peltonschaufelabschnitt 118 enthält zwei Becher 120, 122, die voneinander mittels einer Trennkante 124 getrennt sind.

Die Schaufeln 104 sind aus demselben Edelstahl gebildet wie die Radscheibe 102. Somit sind die Schaufeln 104 und die Radscheibe 102 einstoffig ausgebildet. Dies ist für das Bilden der im Weiteren beschriebenen Schweißverbindung vorteilhaft und reduziert mechanische Spannungen oder dergleichen, die bei unterschiedlichen Materialien Falle von Temperaturschwankungen und dergleichen auftreten können.

Drei durchgehende Schweißnähte 128, 130, 132 sind entlang des gesamten Umfangs der Radscheibe 102 durchgehend gebildet, um eine stoffschlüssige Verbindung zwischen der Radscheibe 102 und den Schaufeln 104 zu schaffen, das heißt um das Material der Radscheibe 102 mit dem Material der Schaufeln 104 untrennbar zu verbinden.

Eine erste Schweißnaht 128 sorgt für eine stoffschlüssige Verbindung zwischen dem ersten Scheibenelement 106 und dem Schweißfortsatz 116 der Schaufeln 104. Eine zweite Schweißnaht 130 sorgt für eine stoffschlüssige Verbindung zwischen dem zweiten Scheibenelement 108 und dem Schweißfortsatz 116 der Schaufeln 104. Eine dritte Schweißnaht 132 sorgt für eine stoffschlüssige Verbindung zwischen der Radscheibe 102 und den Sockeln 112 der Schaufeln 104.

Fig. 1 zeigt eine Querschnittsebene einer Schaufel 104 (schraffierte Fläche der Schaufeln 104). In der Querschnittsebene sind Querschnitte des Eingriffsabschnitts 112, des Verengungsabschnitts 114 und des Stoffschlussfortsatzes 116 abgebildet. Schweißnute, in welchen die Schweißnähte 128 und 130 gebildet werden, sind zwischen einem äußeren Durchmesser der Scheibenelemente 106, 108, einem inneren Durchmesser eines Bereichs des Stoffschlussfortsatzes 116 und einem bezüglich der Drehachse des Turbinenrades axialen Bereich des Verengungsabschnitts 114 eingefügt. Die Schweißnähte 128, 130 sind derart in den zugeordneten Schweißnuten eingefügt, dass eine stoffschlüssige Verbindung mit allen die jeweiligen Schweißnuten bildenden Flächen (Bereiche des Verengungsabschnitts 114, des Stoffschlussfortsatzes 116, der Scheibenelemente 106, 108) erzeugt wird.

**Fig. 1A** zeigt das Turbinenrad 100 mit den Abmessungen A, B und C. In der Querschnittsebene weist der Stoffschlussfortsatz 116 in axialer Richtung eine Breite A von 100% auf. In der Querschnittsebene weist der Verengungsabschnitt 114 in axialer Richtung eine Breite B von ungefähr 40% der Breite des Stoffschlussfortsatzes 116 auf. Die Breite C in axialer Richtung des Eingriffsabschnitts 116 liegt in einem Größenbereich zwischen der Breite A des Stoffschlussfortsatzes 116 und der Breite B des Verengungsabschnitts 114. Die Schweißnähte 128 und 130, welche zwischen den jeweiligen Scheibenelementen 106, 108, dem Stoffschlussfortsatz 116 und dem Verengungsabschnitt 114 eingefügt sind, weisen in der Querschnittsebene in axialer Richtung eine Breite von ungefähr 30% der Breite des Stoffschlussfortsatzes auf. Die Summe der Breitenabmessungen der Schweißnähte 128 und 130 beträgt somit ungefähr 60% der Breite des Stoffschlussfortsatzes 116.

Aufgrund der Tiefe der stoffschlüssigen Verbindung und der Schweißnähte 128 und 130 in axialer Richtung bezogen auf die Drehachse der Radscheibe 102, werden die Turbinenschaufeln 104 robuster an der Radscheibe 102 befestigt. Insbesondere benötigt es bei der Befestigung der Schaufeln 104 keiner Verspannungselemente, da zur Fixierung der jeweiligen Elemente eine reine stoffschlüssige, d.h. eine spannelementefreie, Verbindung ausreicht.

Bei dem Turbinenrad 100 ist die Verbindung zwischen der Mehrzahl von Schaufeln 104 und der Radscheibe 102 im Unterschied zu EP 0,843,092 ohne Spannelemente realisiert. Dies vereinfacht den Aufbau und reduziert die Fehleranfälligkeit des Turbinenrads 100.

Um das Turbinenrad 100 herzustellen, können die Schaufeln 104 zunächst in die ringförmige Umfangsnut 110 des ersten Scheibenelements 106 der Radscheibe 102 eingelegt werden. Dann kann durch Bilden der dritten Schweißnaht 132 eine stoffschlüssige Verbindung der Mehrzahl von eingelegten Schaufeln 104 mit dem ersten Scheibenelement 106 erfolgen. Nachfolgend kann die stoffschlüssig mit dem ersten Scheibenelement 106 verbundene Mehrzahl von eingelegten Schaufeln 104 in eine ringförmige Umfangsnut des zweiten Scheibenelements 108 eingelegt werden, um ein formschlüssiges in Eingriff Bringen der Schaufeln 104 in der Radscheibe 102 zu bewirken. Dann kann durch Bilden der ersten und zweiten Schweißnähte 128, 130 ein Verschweißen der bereits mit dem ersten Scheibenelement 106 verschweißten Schaufeln 104 mit dem zweiten Scheibenelement 108 erfolgen.

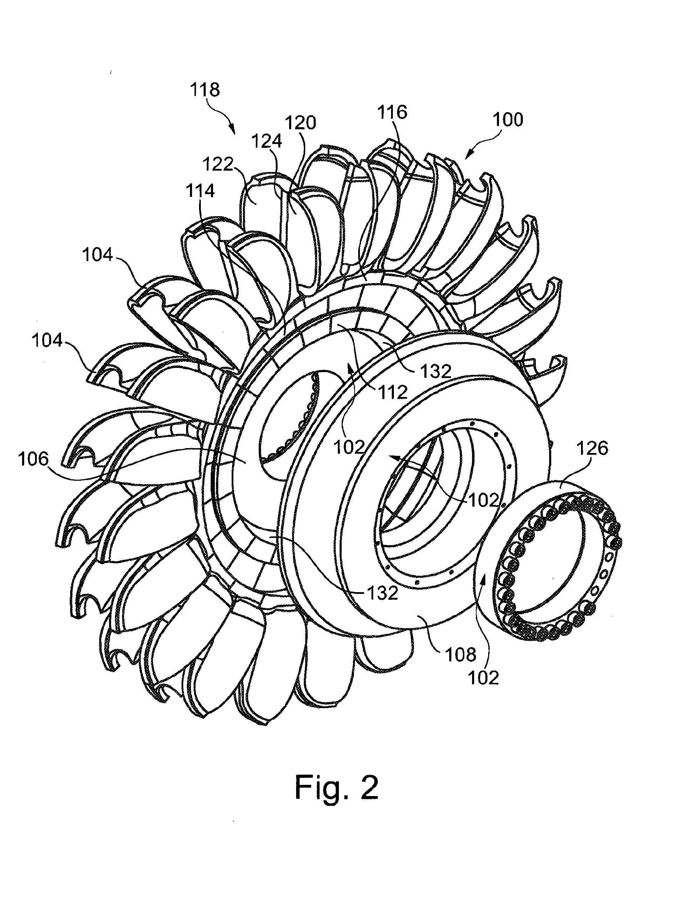

**Fig. 2** zeigt eine Explosionsdarstellung des Wasserturbinenrads 100 bevor die Schweißnähte 128, 130 gebildet sind. Fig. 2 ist zu entnehmen, dass die einzelnen Schaufeln 104 unmittelbar aneinandergrenzend in die Nut 110 eingelegt sind. Anders ausgedrückt ist zwischen benachbarten Schaufeln 104 kein Zwischenraum gelassen. Dadurch ist es ermöglicht, dass auch zwischen benachbarten Schaufeln 104 eine jeweils stoffschlüssige Schweißverbindung hergestellt wird, was die Robustheit des Wasserturbinenrads 100 weiter erhöht.

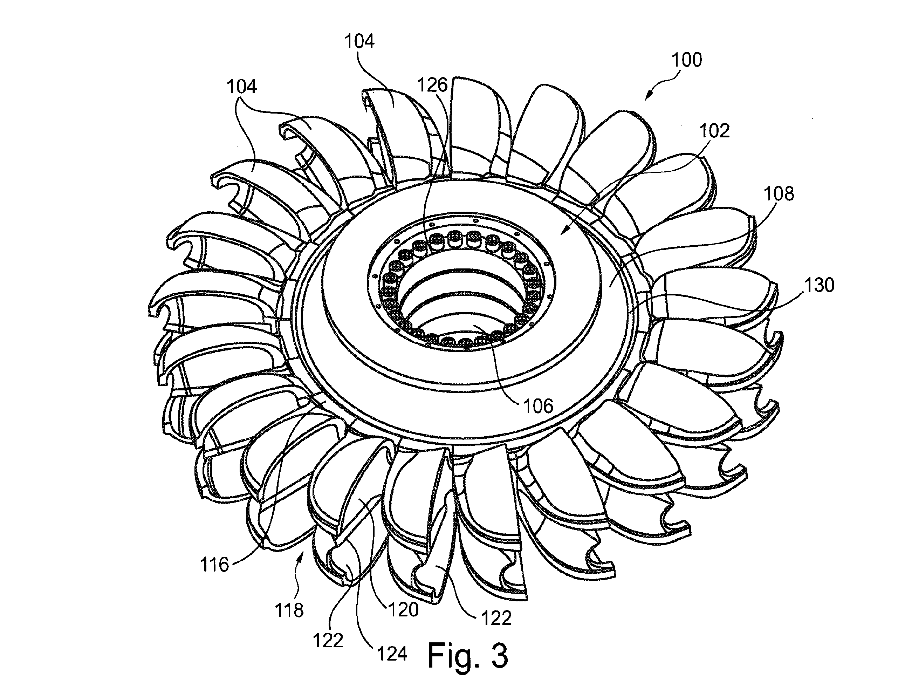

**Fig. 3** zeigt eine räumliche Gesamtansicht des Wasserturbinenrads 100 in einem zusammengesetzten Zustand.

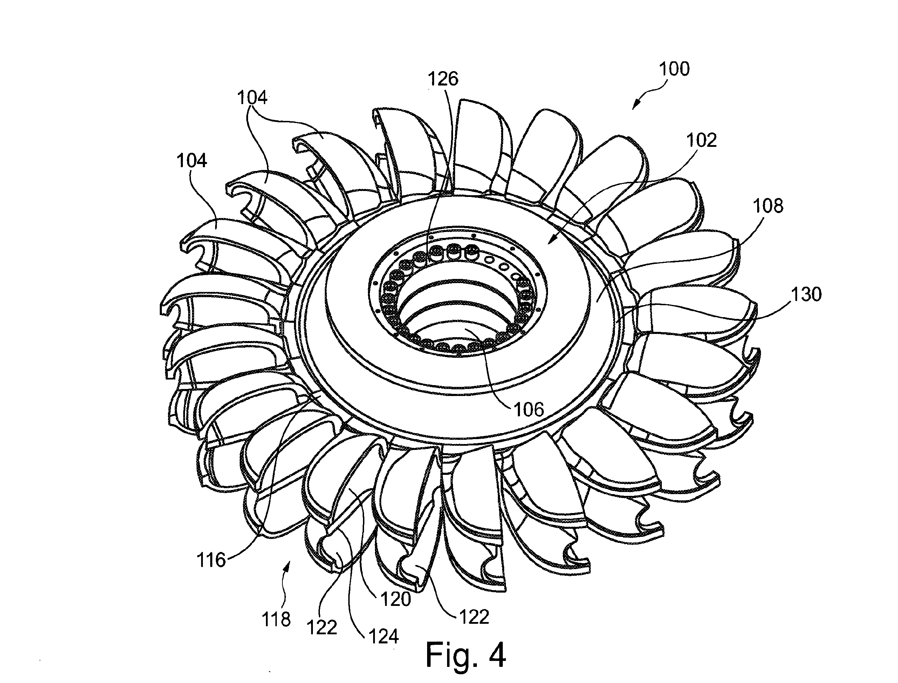

**Fig. 4** zeigt eine räumliche Gesamtansicht des Wasserturbinenrads 100 in einem teilweise zusammengesetzten Zustand vor dem Eindrehen von letzten Befestigungsbolzen in den Befestigungsring 126.

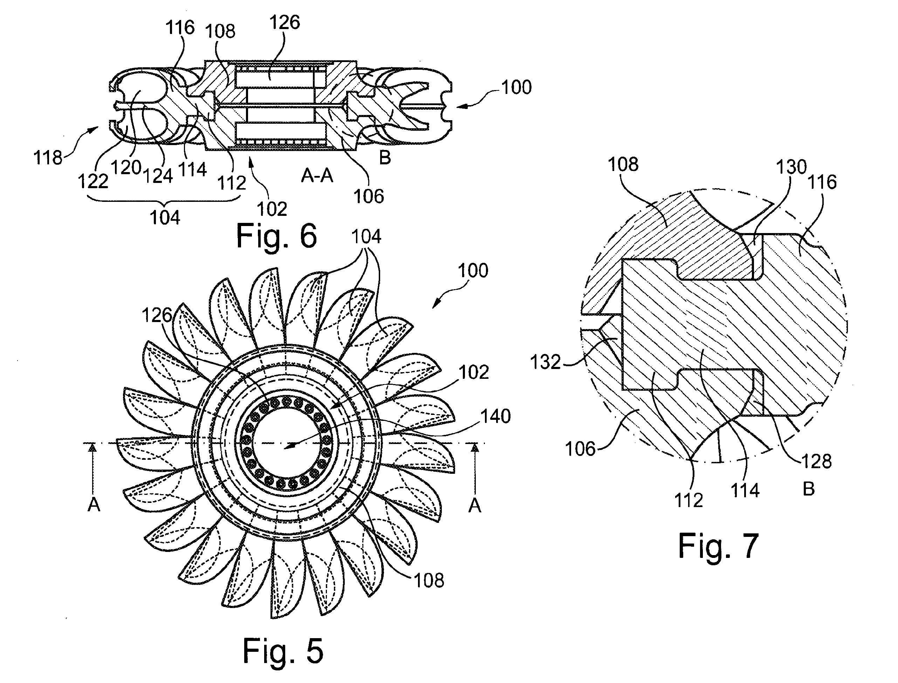

**Fig. 5** zeigt eine Draufsicht des Wasserturbinenrads 100 in einem zusammengesetzten Zustand.

**Fig. 6** zeigt eine Querschnittsansicht des Wasserturbinenrads 100 entlang einer in Fig. 5 gezeigten Line A-A in einem zusammengesetzten Zustand.

**Fig. 7** zeigt eine Detailansicht des Wasserturbinenrads 100 anhand einer in Fig. 6 gezeigten Einzelheit B in einem zusammengesetzten Zustand.

Bei dem Peltonturbinenrad 102 werden die Turbinenschaufeln 104 wie in Fig. 5 bis Fig. 7 ersichtlich mit einer Nut versehen. Die Turbinenschaufeln 104 werden dann zwischen zwei Seitenscheiben 106, 108 formschlüssig fixiert. Durch das Verschweißen am äußeren Scheibendurchmesser mit den einzelnen Turbinenschaufeln 104 wird die Verbindung hergestellt. Zudem ist es noch möglich, das Sockelende 112 einseitig oder beidseitig mit den Scheiben 106, 108 zu verschweißen.

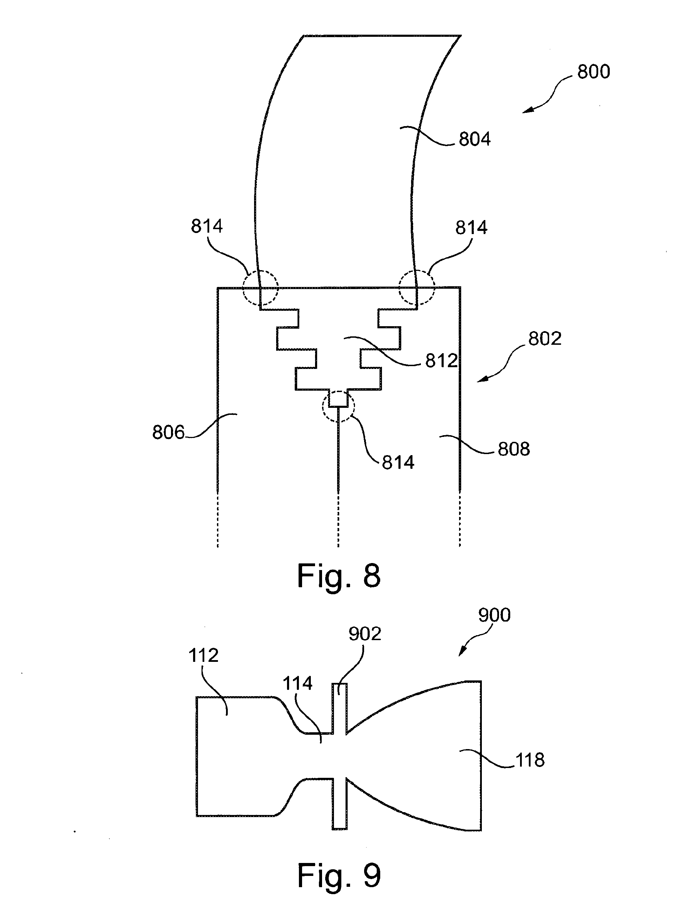

**Fig. 8** zeigt eine Querschnittsansicht eines Dampfturbinenrads 800 gemäß einem anderen exemplarischen Ausführungsbeispiel der Erfindung.

Das Dampfturbinenrad 800 enthält eine aus zwei Komponenten zusammengesetzte Radscheibe 802 (die eine nicht gezeigte Wellenaufnahme zum Aufnehmen einer Turbinenwelle aufweist) und eine Mehrzahl von umfänglich angeordneten Dampfturbinenschaufeln 804. Obwohl nicht gezeigt, sind die Dampfturbinenschaufeln 804 entlang eines Umfangs der Radscheibe 802 mit der Radscheibe 802 in formschlüssigem Eingriff gebracht und mit der Radscheibe 802 verschweißt.

Die Radscheibe 802 weist ein erstes Scheibenelement 806 und ein zweites Scheibenelement 808 auf. Die Scheibenelemente 806, 808 bilden gemeinsam eine ringförmige Umfangsnut mit tannenbaumförmigem Querschnitt, in der tannenbaumförmige Sockel 812 der Schaufeln 804 formschlüssig in Eingriff genommen sind. Stellen, an denen eine oder mehrere stoffschlüssige Schweiß- oder Lötverbindung gebildet sein kann oder können, sind mit Bezugszeichen 814 versehen.

**Fig. 9** zeigt eine Querschnittsansicht einer Wasserturbinenschaufel 900 gemäß einem exemplarischen Ausführungsbeispiel der Erfindung. Bei dieser ist ein Schweißfortsatz 902 als Ring oder Scheibe realisiert.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Turbinenrad (100), aufweisend:
eine Radscheibe (102);
eine Mehrzahl von Schaufeln (104);
wobei die Mehrzahl von Schaufeln entlang eines Umfangs der Radscheibe mit der Radscheibe in formschlüssigem Eingriff gebracht und mit der Radscheibe stoffschlüssig verbunden ist,
wobei zumindest eine der Mehrzahl von Schaufeln aufweist
einen Eingriffsabschnitt (112), der zum formschlüssigem Eingriff in eine korrespondierend ausgebildete Nut der Radscheibe ausgebildet ist;
einen Verengungsabschnitt (114), der zum Herausführen der Schaufel aus der Radscheibe ausgebildet ist;
einen Stoffschlussfortsatz (116), der außerhalb der Radscheibe angeordnet ist und zum stoffschlüssigen Verbinden mit der Radscheibe vorgesehen ist; und
einen Schaufelabschnitt, der mittels eines Antriebsfluids antreibbar ist, und
wobei die stoffschlüssige Verbindung in einer Schweißnut zwischen einem äußeren Durchmesser der Radscheibe (102), dem Stoffschtussfortsatz (116), und dem Verengungsabschnitt (114), ausgebildet ist.

2. Turbinenrad nach Anspruch 1, wobei die Radscheibe ein erstes Scheibenelement und ein zweites Scheibenelement aufweist, die gemeinsam eine ringförmige Umfangsnut einschließen, in der die Mehrzahl von Schaufeln formschlüssig in Eingriff gebracht ist.

3. Turbinenrad nach Anspruch 1 oder 2, eingerichtet als eines aus der Gruppe bestehend aus einem Wasserturbinenrad, einem Dampfturbinenrad und einem Gasturbinenrad.

4. Turbinenrad nach einem der Ansprüche 1 bis 3, wobei die Verbindung zwischen der Mehrzahl von Schaufeln und der Radscheibe spannelementfrei ist.

5. Turbinenrad nach einem der Ansprüche 1 bis 4, wobei die stoffschlüssige Verbindung entlang des gesamten Umfangs der Radscheibe durchgehend gebildet ist.

6. Turbinenrad nach einem der Ansprüche 1 bis 5, wobei die stoffschlüssige Verbindung
zwischen der Radscheibe und zumindest einem Teil der Mehrzahl von Schaufeln; und/oder
zwischen benachbarten der Mehrzahl von Schaufeln
gebildet ist.

7. Turbinenrad nach einem der Ansprüche 1 bis 6, wobei die stoffschlüssige Verbindung zwischen der Radscheibe und der Mehrzahl der Schaufeln entlang eines äußeren Durchmessers der Radscheibe gebildet ist.

8. Turbinenrad nach einem der Ansprüche 1 bis 7, wobei die stoffschlüssige Verbindung zwischen der Radscheibe und der Mehrzahl der Schaufeln an einem Sockelende der Mehrzahl der Schaufeln gebildet ist.

9. Turbine, aufweisend:
ein Turbinenrad nach einem der Ansprüche 1 bis 8 mit einer Wellenaufnahme;
eine Welle, die durch die Wellenaufnahme durchgeführt und mit dem Turbinenrad verbunden ist.

10. Verfahren zum Herstellen eines Turbinenrads (100), wobei das Verfahren aufweist:
formschlüssiges in Eingriff Bringen einer Mehrzah von Schaufeln (104), welche insbesondere geschmiedet werden, mit einer Radscheibe (102), entlang eines Umfangs der Radscheibe;
wobei zumindest eine der Mehrzahl von Schaufeln aufweist
einen Eingriffsabschnitt (112), der zum formschlüssigem Eingriff in eine korrespondierend ausgebildete Nut der Radscheibe ausgebildet ist;
einen Verengungsabschnitt (114), der zum Herausführen der Schaufel aus der Radscheibe ausgebildet ist;
einen Stoffschlussfortsatz (116), der außerhalb der Radscheibe angeordnet ist und zum stoffschlüssigen Verbinden mit der Radscheibe vorgesehen ist; und
einen Schaufelabschnitt, der mittels eines Antriebsfluids antreibbar ist, und
stoffschlüssiges Verbinden der Mehrzahl von Schaufeln mit der Radscheibe,
wobei mittels dem stoffschlüssigem Verbinden eine stoffschlüssige Verbindung in einer Schweißnut zwischen einem äußeren Durchmesser der Radscheibe, dem Stoffschlussfortsatz und dem Verengungsabschnitt ausgebildet wird.

11. Verfahren nach Anspruch 10, wobei das stoffschlüssige Verbinden ein Schweißen, Löten, Kleben und/oder Vulkanisieren aufweist.

12. Verfahren nach Anspruch 10 oder 11, aufweisend:
Einlegen der Mehrzahl von Schaufeln in eine ringförmige Umfangsnut eines ersten Scheibenelements der Radscheibe;
stoffschlüssiges Verbinden der Mehrzahl von eingelegten Schaufeln mit dem ersten Scheibenelement;
Einlegen der stoffschlüssig mit dem ersten Scheibenelement verbundenen Mehrzahl von eingelegten Schaufeln in eine ringförmige Umfangsnut eines zweiten Scheibenelements zum formschlüssigen in Eingriff Bringen;
stoffschlüssiges Verbinden der stoffschlüssig mit dem ersten Scheibenelement verbundenen Mehrzahl von eingelegten Schaufeln mit dem zweiten Scheibenelement.

13. Verfahren nach Anspruch 10 oder 12, aufweisend:
Einlegen der Mehrzahl von Schaufeln in eine ringförmige Umfangsnut eines ersten Scheibenelements der Radscheibe;
Einlegen der in die ringförmige Umfangsnut des ersten Scheibenelements eingelegte Mehrzahl von eingelegten Schaufeln in eine ringförmige Umfangsnut eines zweiten Scheibenelements zum formschlüssigen in Eingriff Bringen;
sodann stoffschlüssiges Verbinden der Mehrzahl von eingelegten Schaufeln mit dem ersten Scheibenelement und mit dem zweiten Scheibenelement.

## Claims

1. A turbine wheel (100), comprising:
a wheel disc (102),
a plurality of blades (104);
wherein the plurality of blades is in form-locking engagement with the wheel disc along a circumference of the wheel disc and is substance bonded with the wheel disc,
wherein at least one of the plurality of the blades comprises
an engagement section (112) which is adapted for a form-locking engagement in a correspondingly formed groove of the wheel disc;
a constriction section (114) which is adapted for guiding the blade out of the wheel disc;
a substance bond extension (116) which is arranged outside of the wheel disc and is intended for substance bonding with the wheel disc; and
a blade section which is drivable by a driving fluid, and
wherein the substance bond is formed in a welding groove between an outer diameter of the wheel disc (102), the substance bond extension (116), and the constriction section (114).

2. Turbine wheel according to claim 1, wherein the wheel disc comprises a first disc element and a second disc element, which commonly enclose an annular circumference groove in which the plurality of blades is in form-locking engagement.

3. Turbine wheel according to claim 1 or 2, which is adapted as one of the group consisting of a water turbine wheel, a steam turbine wheel and a gas turbine wheel.

4. Turbine wheel according to one of the claims 1 to 3, wherein the connection between the plurality of blades and the wheel disc is free of a clamping element.

5. Turbine wheel according to one of the claims 1 to 4, wherein the substance bond is continuously formed along the entire circumference of the wheel disc.

6. Turbine wheel according to one of the claims 1 to 5, wherein the substance bond is formed
between the wheel disc and at least a part of the plurality of the blades; and/or
between adjacent ones of the plurality of blades.

7. Turbine wheel according to one of the claims 1 to 6, wherein the substance bond is formed between the wheel disc and the plurality of blades along an outer diameter of the wheel disc.

8. Turbine wheel according to one of the claims 1 to 7, wherein the substance bond is formed between the wheel disc and the plurality of blades at a base end of the plurality of the blades.

9. Turbine, comprising:
a turbine wheel according to one of the claims 1 to 8, with a shaft accommodation;
a shaft which is guided through the shaft accommodation and connected to the turbine wheel.

10. Method of manufacturing a turbine wheel (100), wherein the method comprises:
form-lockingly engaging a plurality of blades (104), which are in particular forged, with a wheel disc (102) along a circumference of the wheel disc;
wherein at least one of the plurality of the blades comprises
an engagement section (112) which is adapted for a form-locking engagement in a correspondingly formed groove of the wheel disc;
a constriction section (114) which is adapted for guiding the blade out of the wheel disc;
a substance bond extension (116) which is arranged outside of the wheel disc and is intended for substance bonding with the wheel disc; and
a blade section which is drivable by a driving fluid, and
substance bonding the plurality of the blades with the wheel disc,
wherein by the substance bonding a substance bond in a welding groove is formed between an outer diameter of the wheel disc, the substance bond extension and the constriction section.

11. Method according to claim 10, wherein the substance bonding comprises welding, soldering, adhering and/or vulcanizing.

12. Method according to claim 10 or 11, comprising:
inserting the plurality of blades into an annular circumference groove of a first disc element of the wheel disc;
substance bonding the plurality of inserted blades with the first disc element;
inserting the plurality of inserted blades which are substance bonded with the first disc element into an annular circumference groove of a second disc element for form-lockingly engaging;
substance bonding the plurality of inserted blades which are substance bonded with the first disc element with the second disc element.

13. Method according to claim 10 or 12, comprising:
inserting the plurality of blades into an annular circumference groove of a first disc element of the wheel disc;
inserting the plurality of inserted blades which are inserted in the annular circumference groove of the first disc element into an annular circumference groove of a second disc element for form-lockingly engaging;
then, substance bonding the plurality of inserted blades with the first disc element and with the second disc element.

## Revendications

1. Roue de turbine (100), présentant :
un disque de roue (102),
une multitude d'ailettes (104),
sachant que la multitude d'ailettes est amenée en prise par complémentarité de forme, le long d'une périphérie du disque de roue, avec le disque de roue et qu'elle est reliée par liaison de matière au disque de roue,
sachant qu'au moins une ailette de la multitude d'ailettes présente
une section de mise en prise (112), qui est réalisée pour venir en prise par complémentarité de forme avec une rainure, réalisée de manière correspondante, du disque de roue ;
une section de rétrécissement (114), qui est réalisée pour faire sortir l'ailette du disque de roue ;
un prolongement par liaison de matière (116), qui est disposé à l'extérieur du disque de roue et qui se destine à être relié par liaison de matière au disque de roue ; et
une section d'ailette, qui peut être entraînée au moyen d'un fluide d'entraînement, et
sachant que la liaison par liaison de matière est réalisée dans une rainure de soudage entre un diamètre extérieur du disque de roue (102), le prolongement par liaison de matière (116) et la section de rétrécissement (114).

2. Roue de turbine selon la revendication 1, sachant que le disque de roue présente un premier élément disque et un deuxième élément disque, lesquels renferment conjointement une rainure périphérique de forme annulaire, dans laquelle la multitude d'ailettes est amenée en prise par complémentarité de forme.

3. Roue de turbine selon la revendication 1 ou 2, mise au point sous la forme d'une roue de turbine issue du groupe comprenant une roue de turbine à eau, une roue de turbine à vapeur et une roue de turbine à gaz.

4. Roue de turbine selon l'une quelconque des revendications 1 à 3, sachant que la liaison entre la multitude d'ailettes et le disque de roue est exempte d'élément de serrage.

5. Roue de turbine selon l'une quelconque des revendications 1 à 4, sachant que la liaison par liaison de matière est formée en continu le long de l'ensemble de la périphérie du disque de roue.

6. Roue de turbine selon l'une quelconque des revendications 1 à 5, sachant que la liaison par liaison de matière est formée
entre le disque de roue et au moins une partie de la multitude d'ailettes, et/ou
entre des ailettes voisines de la multitude d'ailettes.

7. Roue de turbine selon l'une quelconque des revendications 1 à 6, sachant que la liaison par liaison de matière est formée entre le disque de roue et la multitude d'ailettes le long d'un diamètre extérieur du disque de roue.

8. Roue de turbine selon l'une quelconque des revendications 1 à 7, sachant que la liaison par liaison de matière est formée entre le disque de roue et la multitude d'ailettes au niveau d'une extrémité de socle de la multitude d'ailettes.

9. Turbine, présentant :
une roue de turbine selon l'une quelconque des revendications 1 à 8 pourvue d'un logement d'arbre,
un arbre, qui est guidé au travers du logement d'arbre et qui est relié à la roue de turbine.

10. Procédé servant à fabriquer une roue de turbine (100), sachant que le procédé présente les étapes qui suivent consistant à :
amener en prise par complémentarité de forme une multitude d'ailettes (104), qui sont notamment forgées, avec un disque de roue (102) le long d'une périphérie du disque de roue,
sachant qu'au moins une ailette de la multitude d'ailettes présente :
une section de mise en prise (112), qui est réalisée pour venir en prise par complémentarité de forme avec une rainure, réalisée de manière correspondante, du disque de roue ;
une section de rétrécissement (114), qui est réalisée pour faire sortir l'ailette du disque de roue ;
- un prolongement par liaison de matière (116), qui est disposé à l'extérieur du disque de roue et qui est prévu aux fins de la liaison par liaison de matière au disque de roue ; et
une section d'ailette, qui peut être entraînée au moyen d'un fluide d'entraînement, et
relier par liaison de matière la multitude d'ailettes au disque de roue, sachant qu'une liaison par liaison de matière dans une rainure de soudage est réalisée, au moyen de la liaison par liaison de matière, entre un diamètre extérieur du disque de roue, le prolongement par liaison de matière et la section de rétrécissement.

11. Procédé selon la revendication 10, sachant que la liaison par liaison de matière présente un soudage, un brasage, un collage et/ou une vulcanisation.

12. Procédé selon la revendication 10 ou 11, présentant les étapes suivantes consistant à :
placer la multitude d'ailettes dans une rainure périphérique de forme annulaire d'un premier élément disque du disque de roue ;
relier par liaison de matière la multitude d'ailettes placées au premier élément disque ;
placer la multitude d'ailettes placées, reliée par liaison de matière au premier élément disque, dans une rainure périphérique de forme annulaire d'un deuxième élément de disque aux fins de la mise en prise par complémentarité de forme ;
relier par liaison de matière la multitude d'ailettes placées, reliée par liaison de matière au premier élément disque, au deuxième élément disque.

13. Procédé selon la revendication 10 ou 12, présentant les étapes suivantes consistant à :
placer la multitude d'ailettes dans une rainure périphérique de forme annulaire d'un premier élément disque du disque de roue ;
placer la multitude d'ailettes placées, placée dans la rainure périphérique de forme annulaire du premier élément disque, dans une rainure périphérique de forme annulaire d'un deuxième élément disque aux fins de la mise en prise par complémentarité de forme ;
puis relier par liaison de matière la multitude d'ailettes placées au premier élément disque et au deuxième élément disque.
